# DEMANDE DE BREVET EUROPEEN

(11) **EP 0 644 205 A1**
(43) Date de publication de la demande: **22.03.1995**
(21) Numéro de dépôt: 94401795.3
(22) Date de dépôt: 03.08.1994
(51) Int. Cl.: C08F 2/16, C09D 157/00

(54) **Procédé de préparation de latex à taille de particules ultrafine**

(30) Priorité: 03.09.1993 US 117264
(71) Demandeur: RHONE-POULENC SPECIALTY CHEMICALS CO., New Jersey 08512-7500 (US)
(72) Inventeur: Brinkley, Jessie Alvin, Kennesaw, Georgia 30144 (US); Say, Terence Edwin, Richboro, PA 18954 (GB)
(74) Mandataire: Seugnet, Jean Louis

(57) **Abrégé**

La présente invention conceme un procédé de préparation d'une dispersion aqueuse contenant entre environ 15 et environ 50 % en poids de produits solides, comprenant les étapes de :
(a) addition incrémentielle d'un ou plusieurs monomères éthyléniquement insaturés, capables de se polymériser dans un environnement aqueux, à un réacteur contenant de l'eau et jusqu'à 6,3 parties, pour 100 parties desdits monomères, d'un ou plusieurs tensioactifs ;
(b) addition incrémentielle d'un ou plusieurs initiateurs de polymérisation audit réacteur; et
(c) polymérisation dudit ou desdits monomères éthyléniquement insaturés de sorte que la taille moyenne des particules desdits monomères polymérisés soit inférieure à 100 nm.

Les dispersions aqueuses selon l'invention ont une large gamme d'utilisations pratiques, en particulier dans les compositions de revêtement notamment pour peinture.

## Description

La présente invention concerne des dispersions polymères aqueuses de taille extrêmement fine, et en particulier des dispersions à base de matériau acrylique, ayant une taille moyenne des particules inférieure à 60 nm.
Plus spécifiquement, les dispersions polymères aqueuses de la présente invention sont effectuées par addition incrémentielle de solutions de monomère et d'initiateur à une solution aqueuse contenant au moins un émulsifiant maintenu dans une quantité mineure.
A ce jour, il existe de nombreux latex en émulsion.
Toutefois, les tailles des particules de tels latex sont en général grandes, par exemple de 120 nm et plus.

Le brevet des Etats-Unis US-A 4.177.177 de Vanderhoff *et al*. se rapporte à divers procédés pour préparer des émulsions polymères qui peuvent être utilisées pour produire des latex. Les latex ont en général une taille de particules supérieure à 100 nm.

Le brevet des Etats-Unis US-A 4.228.047 de Pippin et al. concerne une composition de revêtement aqueuse comprenant un copolymère d'au moins 95 % en poids en poids d'acétate de vinyle et d'au moins 0,1 % en poids d'anhydride maléique, qui aurait une compatibilité améliorée avec un liant à base d'amidon.

La demande de brevet japonais JP-A 52103588 d'Asahi Dow concerne une composition de renfort de tapis ("carpet backing") contenant 100 parties en poids (en tant que teneur en produits solides) d'un latex de copolymères : 200 à 350 parties en poids de charge inorganique et d'épaississant, constituée de 30 à 60 % en poids de
a) butadiène : de 20 à 70 % en poids de
b) styrène : de 5 à 30 % en poids de
c) méthacrylate de méthyle : et de 1 à 5 % en poids de
d) une série éthylénique d'acide carboxylique insaturé, et qui a un diamètre moyen des particules de 60 à 120 nm.

En utilisant le latex de petit diamètre des particules pour le renfort de tapis, on évite une formation de cloques.

Le brevet belge BE-A 812139 de DeSoto, Inc. concerne des revêtements opaques obtenus à partir d'un latex constitué d'une suspension aqueuse de petites et de grandes particules de résine, les grandes particules ayant une Tg inférieure à celle des petites et ayant un diamètre moyen qui est plus du double de celui des petites particules, ces dernières formant 20 à 65 % en poids des particules totales. Les particules sont telles que ni les grandes ni les petites ne peuvent, d'elles-mêmes, se combiner lorsque le latex est séché, pour former une pellicule non cellulaire. Les petites particules donnent en fait une poudre dans de telles conditions. Les petites particules sont de préférence du polystyrène et les grandes un copolymère acétate de vinyle et ester d'un alcanol de 4 à 18 atomes de carbone et d'un acide carboxylique insaturé. La composition contient une quantité minimale de solvant et donne rapidement un revêtement opaque de faible porosité après séchage. Elle peut être utilisée pour le rouge à lèvres, les crayons, etc.

Le brevet britannique GB-A 1.100.569 de Dow Chemical Co. concerne des latex polymères acryliques contenant des grandes et des petites particules, préparés
**1)** en faisant chauffer de l'eau contenant un catalyseur soluble jusqu'à 85 °C dans une atmosphère inerte,
**2)** en ajoutant 1/3 d'un mélange de monomères,
**3)** en effectuant la polymérisation pendant au moins 15 minutes, 4) en ajoutant une solution aqueuse d'un émulsifiant anionique et une solution aqueuse du catalyseur de polymérisation, et 5) en ajoutant le monomère restant en continu sur une période d'au moins 45 minutes.

Le brevet des Etats-Unis US-A 3.711.435 de du Pont and Co. concerne une dispersion colloïdale aqueuse stable préparée en mélangeant
**1)** un copolymère de 20 à 80 % en poids d'éthylène et de 80 à 20 % en poids d'un acrylate d'aminoalkyle ;
**2)** un acide ayant une constante de dissociation de 10 à 5 ;
et **3)** de l'eau en une proportion qui donne une teneur en produits solides de 5 à 30 % en poids et un degré de neutralisation des groupes amino du polymère d'au moins 40 %.

Le mélange est effectué à une température appropriée pour disperser le polymère en des particules d'une taille inférieure à 10 nm. Les dispersions obtenues ont de très petites tailles de particules, de sorte qu'elles peuvent être étalées en couche mince sur des substrats en aluminium pour donner des revêtements exempts de vides, et en tant que floculants pour séparer une matière en suspension de l'eau. Le méthacrylate de N,N-diméthylaminoéthyle est un comonomère approprié.

La demande de brevet japonais JP-A 52-123478 de Kurraray concerne des compositions préparées par la polymérisation en émulsion de monomères insaturés en présence d'un colloïde protecteur qui est préparé en clivant des copolymères solubilisés dans de l'eau en présence de radicaux libres et en chauffant. Le composé contient des unités de maléinimide et/ou de maléinimide N-substitué et des unités d'alpha-oléfine en tant que constituants essentiels de la chaîne principale.

Un article d'Ugelstad, El-Aasser et Vanderhoff, Journal of Polymer Science, Polymer Letters Edition, 11, p. 503 : 1973, concerne la préparation de particules de latex par la polymérisation en mini-émulsion d'un système d'émulsifiant mélangé incluant un tensioactif et un cotensioactif d'alcool ou d'alcane à chaîne longue en utilisant un passage aux ultrasons.

Un article d'Atik et Thomas, Journal of American Chemical Society, 103, p. 4279 : 1981, concerne des microémulsions aqueuses de polymères du styrène obtenues par polymérisation en masse, ayant une taille des particules moyenne en nombre d'environ 20 à environ 35 nm en utilisant un émulsifiant mélangé de bromure de cétyltriméthylammonium et d'hexanol, puis en effectuant une polymérisation avec un azobisisobutyronitrile oléosoluble et en irradiant. Toutefois, la teneur en produits solides était très basse, inférieure à 2 %, et la quantité d'émulsifiants utilisée était d'approximativement 1,5 fois la quantité de polymère en poids.

Un article de Jayakrishnan et Shah, Journal of Polymer Science, Polymer Letters, 22, p. 31 : 1984 concerne une polymérisation en masse de particules en microémulsion de polystyrène ou de méthacrylate de méthyle ayant une taille moyenne en nombre d'environ 10 à environ 60 nm, en utilisant du dihexylsulfosuccinate de sodium et des copolymères séquencés oxyde d'éthylène-oxyde de propylène en tant qu'émulsifiants mélangés, et un initiateur oléosoluble tel que le peroxyde de benzoyle.
Toutefois, le rapport pondéral de l'émulsifiant au monomère était d'approximativement un pour un et la microémulsion n'a pas pu être diluée avec de l'eau.

La demande de brevet canadien CA-A 2.013.318, de B. F. Goodrich, concerne un procédé pour produire des microémulsions polymères aqueuses de taille très fine. Le procédé utilise l'addition incrémentielle d'une solution de charge de monomère dans une solution aqueuse incluant un ou plusieurs agents émulsifiants et un ou plusieurs initiateurs hydrosolubles ou d'oxydoréduction.
Tandis que ce procédé peut être utilisé pour préparer de telles microémulsions, il est déficient dans la mesure où l'émulsion a tendance à se décolorer et où il est extrêmement difficile d'obtenir des émulsions ayant un profil de gamme étroite de taille des particules.

Un article d'Okuba et al., "Preparation of Asymmetric Polymer Film by Emulsion Blend Technique" (Préparation d'une pellicule polymère asymétrique par une technique de mélange en émulsion), Colloid & Polymer Science, 268 : pp. 1113 à 1117 (1990), décrit le mélange de deux émulsions de taille de particules différente pour déterminer les propriétés adhésives de tels mélanges. L'une des émulsions de départ décrite est une émulsion de poly(acrylate d'éthyle-méthacrylate de méthyle) ayant une taille de particules de 0,02 µm. Selon l'article, cette émulsion est préparée en combinant les monomères dans une fiole en verre avec de l'eau, du sulfite de sodium, du persulfate de potassium et du dodécylsulfate de sodium. L'ordre et le procédé d'addition des différents réactifs, initiateurs et émulsifiants ne sont pas spécifiés.

La demande de brevet européen EP-A 0 429 207, de Rohm & Haas, concerne un procédé de traitement ou de revêtement d'un substrat avec une composition aqueuse. La composition de revêtement est une dispersion aqueuse de particules de copolymère ayant des phases mutuellement incompatibles et ayant une taille moyenne des particules d'environ 20 à environ 70 nm. La dispersion est préparée par des techniques de polymérisation en émulsion. Dans les modes de réalisation préférés, les particules sont d'une morphologie coeur/coquille ("core/shell) où le coeur a une Tg d'au moins 45 °C et la coquille a une Tg inférieure à 35 °C.

En dépit des enseignements ci-dessus, il existe encore un besoin dans cette technique pour un procédé de préparation de latex en émulsion de taille ultrafine qui ne se décolorent pas, ont une granulométrie étroite, sont aisément reproductibles, et qui utilise une quantité minimale de tensioactif.

Selon la présente invention, il a été maintenant trouvé un procédé pour préparer des latex en émulsion de taille ultrafine qui ne se décolorent pas, ont une granulométrie resérrée, sont aisément reproductibles, et qui utilise une quantité minimale de tensioactif. Le procédé est en particulier caractérisé par l'introduction incrémentielle de monomères et d'initiateurs dans un milieu réactionnel aqueux de sorte que l'ionicité du milieu réactionnel reste constante.

Un mode de réalisation de l'invention comprend un procédé pour produire une dispersion à base d'eau contenant entre environ 15 et environ 50 % en poids de produits solides, comportant les étapes suivantes :
(a) addition incrémentielle d'un ou plusieurs monomères éthyléniquement insaturés, capables de se polymériser dans un environnement aqueux, à un réacteur contenant de l'eau et jusqu'à 6,3 parties, pour 100 parties desdits monomères, d'un ou plusieurs tensioactifs ;
(b) addition incrémentielle d'un ou plusieurs initiateurs de polymérisation audit réacteur ; et
(c) polymérisation dudit ou desdits monomères éthyléniquement insaturés de sorte que la taille moyenne des particules desdits monomères polymérisés soit inférieure à 100 nm.

Dans les modes de réalisation préférés, le procédé utilise des monomères dérivés d'acides et d'esters acryliques, et donne des latex de taille ultrafine ayant une taille moyenne des particules inférieure à 50 nm.

Un autre mode de réalisation de la présente invention comprend la dispersion aqueuse susceptible d'être préparée par le procédé ci-dessus. Le latex polymère de taille ultrafine est stable à la coagulation et peut donc être dilué avec de l'eau. Les particules de polymère ont plusieurs attributs physiques tels qu'une bonne formation de pellicule, une bonne pénétration dans les substrats poreux, un rapport surface spécifique à volume très élevé, une monomodalité et similaires.
Les nouvelles dispersions peuvent être utilisées dans la fabrication de produits de préservation du bois, de revêtements polymères et métalliques, d'adhésifs, de produits chimiques d'imperméabilisation à l'eau, d'apprêts textiles, de produits agrochimiques, de produits pharmaceutiques, de produits chimiques pour champs de pétrole, d'encres, de papeterie, de modificateurs de la rhéologie, de produits cosmétiques, d'agents de diffusion de la lumière ultraviolette, dans les applications biomédicales et d'immuno-essais.

Un but de la présente invention est de produire une émulsion de latex de taille ultrafine qui ne se décolore pas, a une granulométrie étroite, est aisément préparée, et qui utilise une quantité minimale de tensioactif.

Un but supplémentaire de la présente invention est de fournir une émulsion de latex de taille ultrafine qui est stable à la coagulation, est bien filmogène, pénètre bien dans des substrats poreux, a un rapport surface spécifique à volume très élevé et une monomodalité.

Ces buts, comme d'autres buts, apparaîtront aisément aux spécialistes de l'art dans la description détaillée faite du mode de réalisation préféré.

Dans la description ci-dessous, une certaine terminologie sera utilisée aux fins de clarté. Une telle terminologie est destinée à englober le mode de réalisation décrit, ainsi que tous les équivalents techniques qui fonctionnent d'une manière semblable pour un objectif semblable afin d'obtenir un résultat semblable.
Les latex de taille ultrafine sont préparés en ajoutant incrémentiellement un ou plusieurs monomères éthyléniquement insaturés capables de se polymériser dans un environnement aqueux, et en ajoutant incrémentiellement un initiateur de polymérisation à un réacteur contenant de l'eau et un ou plusieurs tensioactifs, puis en laissant polymériser le ou les monomères éthyléniquement insaturés de sorte que la taille moyenne des particules desdits monomères polymérisés soit inférieure à 100 nm. Le terme "addition incrémentielle" définit une forme quelconque d'addition d'une petite quantité de monomère et/ou d'initiateur totaux à la solution aqueuse sur une période de temps prolongée, jusqu'à ce que la totalité des solutions de monomère et d'initiateur soit ajoutée. Cela inclut les additions cycliques, les additions interrompues, les combinaisons de celles-ci, et similaires. De préférence, l'addition du monomère et de l'initiateur est continue et à un taux constant sur une période de temps.
On peut choisir un quelconque monomère éthyléniquement insaturé qui est capable de polymériser dans un environnement aqueux en tant que matériau de départ. Un monomère particulièrement préféré est l'un quelconque des monomères suivants : acides et esters (méth)acryliques, acrylonitrile, styrène, divinylbenzène, acétate de vinyle, acides carboxyliques éthyléniquement insaturés, acrylamide, méthacrylamide, chlorure de vinylidène, butadiène et chlorure de vinyle. Les produits solides de la dispersion qui sont produits peuvent prendre la forme d'homopolymères (c'est-à-dire, seulement un type de monomère choisi) ou de copolymères (c'est-à-dire, on choisit des mélanges de deux types de monomère ou plus ; cela inclut spécifiquement les terpolymères et les polymères dérivés de quatre monomères ou plus).
L'utilisation des acides et esters acryliques est la plus préférée. Les polymères acryliques de la présente invention sont obtenus à partir d'un ou plusieurs monomères acrylates répondant à la formule : 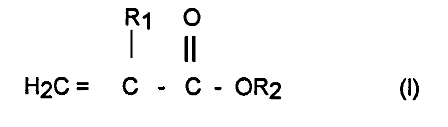
où R₁ est de préférence de l'hydrogène ou un groupe alkyle ayant de 1 à 4 atomes de carbone et R₂ est un groupe aliphatique ayant de 1 à 20 atomes de carbone. Dans les modes de réalisation les plus préférés, R₁ représente un groupe méthyle et R₂ est un groupe alkyle ayant de 1 à 20 atomes de carbone.

Les monomères spécifiquement utiles entrant dans le cadre de la formule (I) incluent le méthacrylate de méthyle, I'acrylate d'éthyle, l'acrylate de butyle, l'acide méthacrylique, l'acide acrylique et les mélanges de ceux-ci.

D'autres monomères ou composés de départ qui peuvent être utilisés pour produire des latex de taille ultrafine sont bien connus dans l'art. Des exemples sont présentés dans The Encyclopedia of Chemical Technology, Kirk-Othmer, John Wiley & Sons, vol. 14, pp. 82 à 97 (1981). Dans la mesure nécessaire, ce passage est incorporé ici à titre de référence.

Lors de la préparation de copolymères qui sont en partie obtenus à partir de monomères acryliques, la quantité de monomère acrylique va typiquement d'environ 30 à environ 99 % de la quantité totale de monomères, les quantités allant d'environ 50 à environ 90 % étant plus préférées, et les quantités allant d'environ 60 à environ 80 % étant les plus préférées.
En plus, lors de la copolymérisation avec un acide, tel que l'acide méthacrylique, le copolymère peut inclure jusqu'à 60 % en poids d'acide. Cela est beaucoup plus élevé que les systèmes de l'art antérieur et permet aux latex d'être particulièrement utiles dans les applications textiles, comme les matériaux obtenus sont plus aisés à dissoudre dans une base.

En outre, lors de la préparation de dispersions de copolymères, les monomères séparés peuvent être introduits dans le milieu réactionnel aqueux à partir d'un même récipient d'alimentation ou à partir de récipients différents.

Pour plusieurs applications, bien que ce ne soit pas nécessaire, il peut être désirable que les polymères produits soient réticulés. Cela est accompli en ajoutant un ou plusieurs agents de réticulation au milieu réactionnel.

Des exemples d'agent de réticulation incluent les composés monofonctionnels tels que les N-alkylolamides de formule 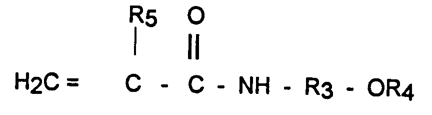
où R₃ est un groupe alkyle ayant de 1 à 10 atomes de carbone, de préférence de 1 à 4 atomes de carbone ; R₄ est de l'hydrogène ou un groupe alkyle ayant de 1 à 10 atomes de carbone, de préférence de 1 à 4 atomes de carbone ; et R₅ est de l'hydrogène ou un groupe alkyle ayant de 1 à 4 atomes de carbone.

Des exemples spécifiques d'agents de réticulation appropriés incluent le N-méthylolacrylamide, le N-éthanolacrylamide, le N-propanolacrylamide, le N-méthylolmaléimide, le N-éthylolmaléamide, l'acide N-méthylolmaléamique, les esters de l'acide N-méthylolmaléamique, les N-alkylolamides des acides aromatiques vinyliques tels que le N-méthylol-p-vinyl-benzamide, et similaires.

Un autre agent de réticulation utile est le N-(isobutoxyméthyl)acrylamide.

On peut aussi utiliser divers composés ou monomères difonctionnels en tant qu'agents de réticulation efficaces. Ils incluent les composés contenant deux groupes oléfiniques tels que le divinylbenzène, le divinylnaphtalène, le divinylcyclohexane, et similaires ; divers esters diacrylates et diméthacrylates de diols aliphatiques où la fraction ester a de 1 à 10 atomes de carbone, et est de préférence un groupe alkyle lorsque la fraction diol a de 2 à 8 atomes de carbone.

Des exemples de ces matériaux incluent le diméthacrylate d'éthylèneglycol, le diacrylate de diéthylèneglycol, le diméthacrylate de diéthylèneglycol et le butylène-glycol.

D'autres agents de réticulation sont décrits dans le Journal of Applied Polymer Science, vol. 34, pp. 2389 à 2397 (1987) John Wiley & Sons, Inc., dans un article intitulé "New Cross-Linking Agents for Vinyl Polymers" (Nouveaux agents de réticulation pour les polymères vinyliques). Dans la mesure nécessaire, cet article est incorporé ici à titre de référence.
La quantité de l'agent de réticulation, lorsqu'il est utilisé, est en général d'environ 0,05 à environ 10 % en poids, de préférence d'environ 0,1 à environ 5 % en poids, et de façonencore plus préférée d'environ 0,1 à environ 1,0 % en poids sur la base du poids total de tous les monomères ajoutés.

On ajoute aussi incrémentiellement au milieu réactionnel aqueux un ou plusieurs initiateurs de polymérisation, de préférence un initiateur thermique de radicaux libres.
L'initiateur de polymérisation peut prendre la forme de nombreux initiateurs connus tels que les initiateurs azo, peroxydes, persulfates et peresters, et peut être hydrosoluble ou soluble dans le monomère. La quantité d'initiateur ajoutée à la solution va typiquement entre environ 0,05 et environ 2 % en poids de l'émulsion, les quantités allant d'environ 0,1 à environ 1,0 % en poids étant particulièrement préférées et les quantités allant d'environ 0,1 à environ 0,5 % en poids étant les plus préférées. L'initiateur de radicaux libres ajouté est de préférence un initiateur de type azo (azobisnitrile) (hydro ou oléosoluble) tel que le 2,2'-azobisisobutyronitrile, le 2,2'-azobis-(2-méthylpropanenitrile), le 2,2'-azobis-(2,4-diméthylpentanenitrile), le 2,2'-azobis-(2-méthylbutanenitrile), le 1,1'-azobis-(cyclohexanecarbonitrile), le 2,2'-azobis-(2,4-diméthyl-4-méthoxyvaléronitrile), le 2,2'-azobis-(2,4-diméthylvaléronitrile) et le chlorhydrate de 2,2'-azobis-(2-amidinopropane).

D'autres initiateurs de radicaux libres qui peuvent être choisis incluent les matériaux peroxydes tels que le peroxyde de benzoyle, I'hydroperoxyde de cumène, le peroxyde d'hydrogène, le peroxyde d'acétyle, le peroxyde de lauroyle, les matériaux persulfates tels que le persulfate d'ammonium, et les peresters tels que le peroxypivalate de t-butyle, le peroxypivalate de α-cumyle et le peroctoate de t-butyle.

Des exemples d'initiateurs commercialement appropriés qui peuvent être choisis incluent le Wako V-50, le Vazo 52, le Vazo 64, le Vazo 67 et le Lupersol 11. Ces initiateurs commerciaux peuvent être inclus avec la charge de monomère.
Dans le cas des initiateurs hydrosolubles, tels que les peroxydes et les persulfates, il est critique que durant la polymérisation l'ionicité du milieu réactionnel soit maintenue à une constante. Cela est accompli en enlevant une partie de l'eau du milieu réactionnel aqueux et en ajoutant cette eau séparée au flux de charge d'initiateur. Le besoin de maintien d'une ionicité constante s'observe lorsqu'on tente un traitement postérieur conventionnel pour le monomère résiduel avec du persulfate d'ammonium et du métabisulfite de sodium. Il se forme de grandes quantités de coagulum, ce qui réduit l'efficacité du procédé. De façon semblable, une charge d'initiateur conventionnelle constituée de persulfate d'ammonium et représentant 1 à 3 % en poids du volume total d'eau provoque l'agglomération des particules de polymère tout au long de l'addition de l'initiateur.
Il a été trouvé qu'en maintenant une ionicité constante dans le mélange réactionnel, I'agglomération peut être évitée, donnant une émulsion d'une taille de particules plus uniforme. En diluant l'initiateur hydrosoluble avec la quantité appropriée d'eau, la résistance ionique du système d'initiateur est la même que celle du contenu du réacteur à un quelconque moment durant la réaction/l'introduction de l'initiateur. On suppose que cette ionicité appariée (exprimée dans le nombre de charges par volume) permet la migration à diffusion contrôlée d'espèces chargées telles que le persulfate d'ammonium et les tensioactifs ioniques depuis les gouttelettes jusqu'au mélange réactionnel et vice-versa.
L'utilisation de solutions d'initiateur très concentrées permettrait de grands changements dans la concentration ionique de l'aire entourant immédiatement une gouttelette d'initiateur. L'hypothèse est que ce changement massif de densité de charge l'emporte sur les forces stabilisantes exercées sur les particules par les résidus de tensioactif et d'initiateur.
On peut obtenir le même équilibre ionique par le choix soigneux d'un initiateur soluble dans le monomère, de charge neutre, tel que l'initiateur de type azo commercialisé, comme le VAZO 52 (2,2'-azobis-(2,4-diméthylvaléronitrile) ou le VAZO 64 (2,2'-azobisisobutyronitrile). Dans ces cas, la quantité entière d'initiateur est contenue dans la charge de monomère.
On pense que le concept de maintien d'une ionicité constante dans le milieu réactionnel n'a pas été utilisé pour former des latex polymères ultrafins de taille uniforme jusqu'à la présente invention. L'art antérieur dans le domaine des latex de taille ultrafine décrit que l'initiateur est contenu dans le réacteur aqueux ou ajouté en "un seul coup".

Selon le procédé de la présente invention, le(s) monomère(s) et le(s) initiateur(s) sont introduits dans un milieu réactionnel aqueux qui comprend de l'eau et au moins un ou plusieurs émulsifiants. Les émulsifiants sont en général des tensioactifs et peuvent donc être des tensioactifs copolymérisables cationiques, non ioniques, anioniques, amphotères et similaires, les anioniques étant en général désirés. En général, le type d'émulsifiants utilisés sont ceux qui peuvent être utilisés dans les polymérisations de latex conventionnelles. Comme le reconnaîtra un spécialiste de l'art, un critère clé pour choisir un tensioactif est sa compatibilité avec l'initiateur.

Des exemples de tensioactifs amphotères appropriés incluent les sels de métal alcalin, de métal alcalino-terreux, d'ammonium ou d'ammonium substitués d'amphocarboxyglycinates d'alkyle et d'amphocarboxypropionates d'alkyle, d'amphodipropionates d'alkyle, d'amphodiacétates d'alkyle, d'amphoglycinates d'alkyle et d'amphopropionates d'alkyle, où alkyle représente un groupe alkyle ayant 6 à 20 atomes de carbone.

D'autres tensioactifs amphotères incluent les iminopropionates d'alkyle, les iminodipropionates d'alkyle et les amphopropylsulfonates d'alkyle ayant entre 12 et 18 atomes de carbone, les alkylbétaïnes et amidopropylbétaïnes et les alkylsultaïnes et alkylamidopropylhydroxysultaïnes où alkyle représente un groupe alkyle ayant 6 à 20 atomes de carbone.
Les tensioactifs anioniques qui peuvent être choisis incluent l'un quelconque des hydrophobes connus attachés à un groupe solubilisant carboxylate, sulfonate, sulfate ou phosphate incluant les sels. Les sels peuvent être les sels de sodium, de potassium, de calcium, de magnésium, de baryum, de fer, d'ammonium et d'amine de tels tensioactifs.

Des exemples de ces tensioactifs anioniques incluent les sels hydrosolubles des benzène-sulfonates d'alkyle ayant entre 8 et 22 atomes de carbone dans le groupe alkyle, les éthersulfates d'alkyle ayant entre 8 et 22 atomes de carbone dans le groupe alkyle, les sels de métal alcalin, d'ammonium et d'alcanolammonium ou les produits organiques de réaction sulfurique ayant dans leur structure moléculaire un groupe alkyle ou alcaryle contenant de 8 à 22 atomes de carbone et un groupe ester d'acide sulfonique ou sulfurique.
On préfère les sulfates d'alkyle de sodium et de potassium linéaires. On préfère en particulier l'utilisation du laurylsulfate de sodium (dodécylsulfate de sodium). Un autre type de tensioactif anionique préféré sont les benzène-sulfonates d'alkyle, dans lesquels le groupe alkyle contient entre environ 9 et environ 15, et de préférence encore, entre environ 11 et environ 13 atomes de carbone dans une configuration de chaîne linéaire ou de chaîne ramifiée, et encore plus de préférence une chaîne droite linéaire ayant un groupe alkyle moyen d'environ 11 atomes de carbone.
Dans certains modes de réalisation, on peut utiliser des mélanges de tensioactifs anioniques, les mélanges de tensioactifs sulfonates et sulfates d'alkyle ou d'alkylaryle étant particulièrement préférés. De tels modes de réalisation comprennent un mélange de sels de métal alcalin, de préférence les sels de sodium, des benzène-sulfonates d'alkyle ayant d'environ 9 à 15, et de préférence entre 11 et 13 atomes de carbone, avec un sel de métal alcalin, de préférence le sodium, d'un sulfate d'alkyle ou d'un éthoxysulfate d'alkyle ayant 10 à 20, et de préférence 12 à 18, atomes de carbone et une éthoxylation moyenne de 2 à 4.
Des tensioactifs anioniques spécifiques qui peuvent être choisis incluent les benzène-sulfonates d'alkyle linéaires tels que le dodécylbenzènesulfonate, le décylbenzènesulfonate, l'undécylbenzènesulfonate, le tridécylbenzènesulfonate, le nonylbenzènesulfonate et les sels de sodium, de potassium, d'ammonium, de triéthanolammonium et d'isopropylammonium de ceux-ci.

Des exemples de tensioactifs non ioniques utiles incluent les condensats de l'oxyde d'éthylène avec une fraction hydrophobe qui a un équilibre hydrophile-lipophile (HLB) moyen entre environ 8 et environ 16 et, de préférence, entre environ 10 et environ 12,5.
Ces tensioactifs incluent les produits de condensation des alcools aliphatiques primaires ou secondaires ayant d'environ 8 à environ 24 atomes de carbone, dans une configuration de chaîne linéaire ou ramifiée, avec d'environ 2 à environ 40, et de préférence entre environ 2 et environ 9, moles d'oxyde d'éthylène par mole d'alcool.
D'autres tensioactifs non ioniques appropriés incluent les produits de condensation d'alkylphénols d'environ 6 à environ 12 atomes de carbone avec environ 3 à environ 30, et de préférence entre environ 5 et environ 14 moles d'oxyde d'éthylène.

Des exemples de tels tensioactifs sont commercialisés sous les noms commerciaux Igepol CO 530, Igepol CO 630, Igepol CO 720 et Igepol CO 730 par Rhône-Poulenc.
Encore d'autres tensioactifs non ioniques appropriés sont décrits dans le brevet des Etats-Unis US-A 3.976.586. Dans la mesure nécessaire, ce brevet est incorporé expressément à titre de référence.

Des exemples de tensioactifs cationiques incluent le bromure de cétyltriméthylammonium.
D'autres tensioactifs qui peuvent être utilisés incluent ceux décrits dans McCutcheons, "Detergents and Emulsifiers", 1978, North American Edition, édité par la division McCutcheon, MC Publishing Corp., Glen Rock, New Jersey, UESTA., ainsi que dans les diverses éditions subséquentes. Dans la mesure nécessaire, cette publication est incorporée expressément à titre de référence.
Dans la pratique, la quantité de tensioactif présent dans la phase aqueuse va d'environ 0,5 à environ 6,3 % en poids des monomères ajoutés. Les quantités entre environ 0,5 et environ 3,0 % en poids des monomères totaux ajoutés sont plus préférées et les quantités entre environ 1,0 et environ 3,0 % en poids des monomères totaux ajoutés sont les plus préférées. En général, la taille des particules du latex décroît avec des quantités croissantes de tensioactif ajouté jusqu'à environ 3,0 % en poids. Au-delà de 3,0 % en poids de tensioactif, la diminution de la taille des particules est beaucoup moins prononcée.
Le milieu réactionnel peut inclure entre environ 0,5 et environ 10,0 % en poids, des monomères ajoutés, d'autres additifs optionnels pour fournir des propriétés fonctionnelles spécifiques au latex final. Des exemples de tels additifs incluent les plastifiants tels que le polyéthylèneglycol, les agents antimousse, les pigments, les colorants et teintures, les agents antibactériens, les parfums, les produits pharmaceutiques, les enzymes et autres agents biologiquement actifs, les produits chimiques agricoles, les agents actifs aux ultraviolets, les stabilisateurs et modificateurs de la rhéologie.

Pour produire les nouveaux latex de la présente invention, on utilise un procédé de polymérisation semi-continu ou continu. Cela comprend l'addition du monomère, l'introduction de l'agent de réticulation si nécessaire et des solutions d'initiateur incrémentiellement dans le réacteur, qui est typiquement porté à des températures entre environ 45 °C et environ 90 °C et inclut de l'eau et un ou plusieurs émulsifiants sur une période de temps, à la différence d'une addition discontinue. Optionnellement, le réacteur peut contenir une petite quantité de monomère avant le commencement de la polymérisation incrémentielle, qui agit en tant que "graine". Une quantité de monomère aussi petite est en général inférieure à 30 % en poids et de préférence non supérieure à environ 10 % en poids du monomère total utilisé. La vitesse d'addition du monomère est en général régie par divers facteurs tels que la taille du réacteur, l'augmentation de température de réaction exothermique, la capacité de refroidissement du réacteur, et similaires, de sorte que la température de réaction est en général maintenue à une valeur ou gamme spécifique.
La quantité du ou des émulsifiants généralement contenus dans le réacteur est en général d'au moins 50 ou 60 % en poids, de préférence d'au moins 70 % en poids, de préférence encore d'au moins 80 % en poids, et de préférence d'au moins 90 % en poids de la quantité totale d'émulsifiants. L'émulsifiant restant, s'il y en a, est introduit avec les flux de charge de monomère ou d'initiateur.
Le réacteur peut être maintenu à des températures aussi basses que les températures ambiantes (10 °C à 20 °) jusqu'au point d'ébullition de la solution aqueuse. La pression de réaction est en général atmosphérique, mais elle peut être élevée si nécessaire pour aider la polymérisation.
Comme décrit ci-dessus, la charge de monomère et la charge d'initiateur peuvent être la même charge si l'initiateur est soluble dans le monomère. En outre, si l'initiateur est hydrosoluble et chargé, comme le persulfate d'ammonium, il est introduit de sorte que I'ionicité dans la totalité du réacteur soit maintenue à une constante. On accomplit typiquement cela en transférant initialement une quantité de l'eau du réacteur dans la charge d'initiateur pour créer des concentrations ioniques qui soient, tant dans le récipient d'alimentation que dans le réacteur, substantiellement égales.
L'introduction de la solution d'initiateur sur une base incrémentielle procure une concentration de radicaux libres généralement en régime permanent, tout au long de l'addition du monomère. Cette concentration de radicaux libres en régime permanent évite les faibles concentrations de radicaux observées avec des charges uniques d'initiateurs et des durées d'alimentation prolongées. C'est cette disponibilité continue et aisée de radicaux libres qui permet à la formation de nouvelles chaînes et particules, de concurrencer efficacement l'addition de monomère aux particules existantes. Par rapport aux systèmes d'introduction d'initiateur en un seul coup de l'art antérieur, le procédé de l'invention améliore nettement la monodispersibilité du latex obtenu.
La polymérisation continue jusqu'à ce que la totalité du (des) monomère(s) et de l'initiateur ait été ajoutée dans le réacteur et jusqu'à ce que presque toute la charge de monomère ait été convertie en une forme polymérisée. La polymérisation est en général poursuivie jusqu'à ce qu'on obtienne une conversion élevée, telle que supérieure à 80 %, de façon désirée d'au moins 90 ou 95 %, et de préférence d'au moins 98 %, ou même une conversion complète.
Indépendamment du type particulier de monomères choisis pour la polymérisation dans le procédé décrit ci-dessus, la taille moyenne des particules du polymère est très petite.
Par le terme "taille des particules", on entend la taille médiane des particules moyenne en volume, mesurée par spectroscopie par photocorrélation. Les latex polymères produits selon la présente invention ont une taille des particules moyenne en volume très petite, de 100 nm ou moins, les tailles de particules moyennes préférées étant entre environ 1 et environ 60 nm, plus préférées entre environ 5 et environ 40 nm, encore plus préférées entre environ 10 et environ 30 nm, et idéalement entre environ 10 et environ 20 nm. En général, on peut obtenir l'une quelconque des gammes de taille des particules ci-dessus en fonction des propriétés finales spécifiques désirées.

En outre, et en particulier à cause du système d'introduction incrémentielle de l'initiateur utilisé, l'éventail de la gamme de taille des particules produite est limitée. En pratique, I'écart type pour chaque latex de taille désirée n'est pas supérieur à 4 nm.
Le procédé ci-dessus donne un latex polymère qui est stable à la coagulation dans la mesure où il peut être dilué avec de l'eau sans apparition de coagulation. La teneur en produits solides du latex est relativement élevée, comme d'environ 5 % à environ 55 % en poids, de façon désirée d'environ 15 % à environ 50 % en poids, de préférence encore d'environ 20 à environ 40 % en poids, et de toute préférence d'environ 25 à environ 35 % en poids, sur la base du poids total du latex polymère aqueux.
Les propriétés du latex polymère dépendent largement des monomères choisis pour la polymérisation. Par exemple, la une température de transition vitreuse des polymères peut aller d'environ -54 °C à plus de 130 °C.
Les latex polymères de la présente invention, du fait de leur taille extrêmement fine, sont utiles dans de nombreuses applications telles que les agents de préservation du bois, les revêtements polymères et métalliques, les adhésifs, les produits chimiques d'imperméabilisation à l'eau, les apprêts textiles, les produits chimiques agricoles, les produits pharmaceutiques, les produits chimiques pour champs de pétrole, les encres, la papeterie, les modificateurs de la rhéologie, les produits cosmétiques, les produits de soins personnels, les agents de diffusion de la lumière ultraviolette, les écrans solaires, et les applications biomédicales et d'immuno-essais. Bien qu'ils soient des latex au niveau de la structure, ils approchent souvent des propriétés de type solution. En plus, ils peuvent être utilisés seuls ou en combinaison avec d'autres matériaux, tels que les émulsions de taille moyenne des particules plus élevée, pour donner des produits ayant des utilisations conçues spécifiquement.

L'invention sera mieux comprise en se reportant aux exemples suivants :

### Exemple 1

On prépare un latex polymère aqueux de méthacrylate de méthyle comme suit : 100 parties par centaine (ppc) de méthacrylate de méthyle sont mélangées avec 0,5 ppc de Vazo 52, un initiateur thermique (2,2'-azobis-(2,4-diméthylvaléronitrile)) soluble dans le méthacrylate de méthyle. Cette solution monomère/initiateur est introduite régulièrement en 3 heures dans un réacteur de 1 litre en verre qui contient 185 ppc d'eau et 3 ppc de dodécylsulfate de sodium. Le réacteur est maintenu à 85 °C et agité constamment. A la fin de l'addition du monomère, le réacteur est maintenu à 85 °C pendant 1 heure de plus. Le mélange réactionnel est ensuite amené à une conversion presque complète par traitement avec 0,015 ppc d'hydroperoxyde de t-butyle et 0,015 ppc de métabisulfite de sodium, à une température de 62 °C. Cette synthèse aboutit à un latex polymère aqueux contenant 35 % en poids de produits solides. La taille moyenne des particules, mesurée par un Niacomp 370A, est de 14 nm. Ce latex polymère est translucide du fait de la petite taille de particules des particules du latex.
Le latex est de couleur bleue et a une Tg d'environ 105 °C.

### Exemple 2

Un latex polymère aqueux d'acrylate de butyle, de méthacrylate de méthyle et d'acide méthacrylique est préparé en utilisant le même procédé que dans l'exemple 1. La composition de la solution monomère/initiateur est 65 ppc d'acrylate de butyle, 25 ppc d'acide méthacrylique, 10 ppc de méthacrylate de méthyle et 1 ppc de VAZO-64 (2,2'-azobisisobutyronitrile). Ce procédé donne un latex à 25 % en poids de produits solides totaux et une taille moyenne des particules mesurée en volume de 14 nm. Le latex est transparent, de couleur bleue, et a une Tg d'environ -5 °C.

### Exemple 3

Un latex polymère aqueux de styrène, d'acrylate de butyle et d'acide méthacrylique est préparé comme suit : 65 ppc d'acrylate de butyle, 25 ppc d'acide méthacrylique et 10 ppc de styrène sont soigneusement mélangés ensemble pour former une solution de charge. Dans un récipient d'alimentation séparé, on ajoute 0,25 ppc de peroxydisulfate d'ammonium à 65 ppc d'eau. Dans un réacteur séparé, on ajoute 3 ppc de dodécylsulfate de sodium à 244 ppc d'eau et on chauffe à 85 °C sous agitation continue. La raison de la préparation de la solution d'initiateur aqueuse séparée est de permettre une ionicité constante dans le réacteur tout au long du mode opératoire de synthèse. Dix pour cent du volume total de la solution de peroxydisulfate d'ammonium sont ajoutés au mélange chauffé, et les solutions d'initiateur et de monomère commencent à être introduites à un débit qui permette une introduction régulière des solutions de charge sur un intervalle de trois heures. Le mélange réactionnel est agité pendant 30 minutes de plus et ensuite refroidi à 62 °C. 0,10 ppc de métabisulfite de sodium est dissous dans 24 ppc d'eau et introduit dans le mélange réactionnel sur un intervalle de 1 heure. La température de réaction est ensuite portée à 85 °C pendant 1 heure. Le mélange est ensuite refroidi à la température ambiante et filtré. Cette charge aboutit à un latex polymère aqueux contenant 23,3 % en poids de produits solides. La taille moyenne des particules moyenne en volume mesurée par spectroscopie par photocorrélation est de 34 nm. Le latex est transparent, de couleur bleue, et a une Tg d'environ -5 °C.

### Exemple 4

A une solution contenant 4,17 ppc de laurylsulfate de sodium et 313 ppc d'eau, on ajoute 0,25 ppc de persulfate d'ammonium dissous dans 0,52 ppc d'eau. Après une période de démarrage de cinq minutes, un mélange de 53 ppc d'acrylate de butyle et de 47 ppc de méthacrylate de méthyle est introduit dans la solution sur un intervalle de 2 heures. La température est ensuite portée à 92 °C pendant ½ heure puis le mélange est ensuite refroidi et filtré. On obtient un latex bleu-gris ayant un taux de produits solides de 24,85 %. Ce latex a une taille moyenne des particules inférieure à 30 nm et a une Tg de -5 °C.

### Exemple 5

A une solution contenant 2,57 ppc de laurylsulfate de sodium et 241 ppc d'eau, on ajoute 0,15 ppc de persulfate d'ammonium dissous dans 0,3 ppc d'eau. Après une période de démarrage de cinq minutes, un mélange de 43 ppc d'acrylate de butyle et de 57 ppc de méthacrylate de méthyle est introduit dans la solution sur un intervalle de 2 heures. La température est ensuite portée à 92 °C pendant ½ heure puis le mélange est ensuite refroidi et filtré. On obtient un latex bleu-gris à un taux de produits solides de 23,10 %. Ce latex a une taille moyenne des particules inférieure à 30 nm et a une Tg de 0 °C.

### Exemple 6

A une solution contenant 3,1 ppc de laurylsulfate de sodium et 245 ppc d'eau, chauffée à 85 °C, on ajoute en continu et simultanément deux charges séparées. Une charge est constituée de 0,32 ppc de persulfate d'ammonium dissous dans 85 ppc d'eau et l'autre charge est constituée de 10 ppc de styrène, de 25 ppc d'acide méthacrylique et de 65 ppc d'acrylate de butyle. L'introduction de chaque charge séparée se produit pendant approximativement 2,5 heures et chaque flux de charge est introduit dans le réacteur d'une manière telle que les deux flux de charge soient complètement épuisés au bout d'approximativement 2 à 5 heures. Une solution contenant 0,1 ppc de métabisulfite de sodium dissous dans 24 ppc d'eau est ensuite introduite dans le mélange réactionnel sur un intervalle de ½ heure. La température est maintenue pendant 1 heure et le mélange réactionnel est ensuite refroidi à la température ambiante et est filtré. On obtient un latex bleu transparent ayant un taux de produits solides de 23,3 % et une taille moyenne des particules d'environ 14 nm.

### ESSAI QUANTITATIF ET QUALITATIF

### Propriétés de pénétration du bois

On effectue un essai pour déterminer la capacité de pénétration du bois des latex de l'invention par rapport à des produits commercialement disponibles. On utilise le mode opératoire d'essai suivant :
1. on prépare des solutions à 10 % de produits solides de chaque latex en diluant chaque latex avec une quantité appropriée d'eau distillée.
2. On découpe une cheville en pin en sections de 3 pouces et chaque cheville est immergée dans chaque solution de latex pendant 3 heures.
3. Chaque cheville est séchée dans des conditions ambiantes pendant une nuit.
4. On prépare une solution de colorant à 2 % de Nigrosine et on immerge chaque cheville séchée dans la solution pendant 24 heures.
5. Chaque cheville est retirée et séchée dans des conditions ambiantes pendant une nuit.
6. On découpe des morceaux de coupe transversale dans chaque cheville et on les évalue quant à la pénétration du colorant.

Les latex échantillons testés sont :
*Echantillon A* : latex de l'exemple 4
*Echantillon B* : latex de l'exemple 5
*Echantillon C* : Joncryl 537, 46 % de produits solides nets (S. C. Johnson)
*Echantillon D* : Reichhold 40-423, 46 % de produits solides nets (Reichhold Chemical)
*Echantillon E* : UCAR 429, 47 % de produits solides nets (Union Carbide)

La taille des particules et la pénétration relative du colorant pour chaque échantillon sont présentées au tableau 1 :

**Tableau 1**

| **Echantillon** | **Taille des particules** | **Pénétration** |
|---|---|---|
| A | < 30 nm | minimale |
| B | < 30 nm | minimale |
| C | 90 nm | légère |
| D | 100 nm | appréciable |
| E | 150 nm | importante |

La pénétration minimale constatée lors de l'utilisation des matériaux de l'invention démontre que les latex de plus petite taille des particules pénètre mieux le bois que les latex conventionnels. Par conséquent, les matériaux de l'invention forment des revêtements protecteurs du bois significativement meilleurs que les matériaux commerciaux.

### Propriétés tensioactives

Les tensions superficielles de solutions à 10 % de produits solides des échantillons A, C, D et E sont analysées en utilisant un tensiomètre de surface à bulles SensaDyne. Les résultats sont présentés au tableau 2. La mesure de la tension superficielle est en dynes/cm.

**Tableau 2**

| **Echantillon** | **Taille des particules** | **Tension superficielle** |
|---|---|---|
| A | < 30 nm | 57,3 |
| C | 90 nm | 40,8 |
| D | 100 nm | 57,2 |
| E | 150 nm | 47,9 |

La capacité de pénétration dépend beaucoup de la capacité d'humidification. Si un produit n'humidifie pas bien une surface, il aura peu de chance de pénétrer cette surface. La tension superficielle plus élevée de l'échantillon A, I'échantillon de l'invention, procure à ce produit un net désavantage dans les études de pénétration.

Toutefois, l'exemple précédent démontre que l'échantillon A a une bien meilleure pénétration du bois que les échantillons commerciaux (C, D et E). Ainsi, l'hypothèse est que la taille des particules des échantillons est beaucoup plus importante que la tension superficielle au niveau de la détermination de la capacité de pénétration d'un latex. En plus, les essais ci-dessus sont effectués en utilisant des solutions à 10 % de produits solides. On suppose que, en utilisant les échantillons sous une forme "nette", les échantillons A et B présenteraient des résultats positifs encore améliorés.
Propriétés d'apprêt des textiles

Le latex de l'exemple 6 est comparé avec les produits commerciaux Permaloid 150 et Permaloid 172, tous deux fabriqués par Rhône-Poulenc pour l'utilisation en tant qu'apprêts textiles. Tous les échantillons sont évalués à des concentrations de 7 % et appliqués sur des fibres en filaments polyester avec une machine à encoller de laboratoire. La résistance à l'abrasion du latex de l'échantillon 6 est approximativement égale à celle du Permaloid 150 et du Permaloid 172. L'avantage procuré par l'utilisation du latex de l'invention est l'absence de neutralisation avant l'application. Les apprêts conventionnels, tels que le Permaloid 150 et le Permaloid 172, sont appliqués sous forme de solutions polymères préparées par la solubilisation provoquée par un alcali d'un polymère de latex conventionnel. Les apprêts textiles à base de latex ultrafin de l'invention sont appliqués directement sur la fibre sans neutralisation. Cela élimine le besoin d'alcali et le contrôle du dégagement d'ammoniac, normalement associés avec l'apprêt de fibres en filaments et confère donc des avantages significatifs par rapport à des matériaux commercialement disponibles.

L'invention étant décrite en détail et avec référence aux modes de réalisation préférés de celle-ci, on constatera que des modifications et variations sont possibles sans s'écarter pour autant de la portée des revendications annexées.

## Revendications

1. Procédé pour préparer une dispersion aqueuse contenant entre environ 15 et environ 50 % en poids de produits solides, caractérisé en ce qu'il comporte les étapes suivantes :
(a) addition incrémentielle d'un ou plusieurs monomères éthyléniquement insaturés, capables de se polymériser dans un environnement aqueux, à un réacteur contenant de l'eau et jusqu'à 6,3 parties, pour 100 parties desdits monomères, d'un ou plusieurs tensioactifs ;
(b) addition incrémentielle d'un ou plusieurs initiateurs de polymérisation audit réacteur ; et
(c) polymérisation dudit ou desdits monomères éthyléniquement insaturés de sorte que la taille moyenne des particules desdits monomères polymérisés soit inférieure à 100 nm.

2. Procédé selon la revendication 1, caractérisé en ce que les étapes (a) et (b) sont effectuées simultanément.

3. Procédé selon la revendication 1, caractérisé en ce que ledit ou lesdits monomères éthyléniquement insaturés sont choisis dans le groupe constitué des acides et esters (méth)acryliques, de l'acrylonitrile, du styrène, du divinylbenzène, de l'acétate de vinyle, des acides carboxyliques éthyléniquement insaturés, du butadiène, de l'acrylamide, du méthacrylamide, du chlorure de vinylidène, du chlorure de vinyle et des mélanges de ceux-ci.

4. Procédé selon la revendication 3, caractérisé en ce que ledit ou lesdits monomères éthyléniquement insaturés sont de formule (I) 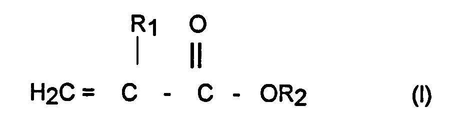 où R₁ est de l'hydrogène ou un groupe alkyle ayant de 1 à 4 atomes de carbone et R₂ est un groupe aliphatique ayant de 1 à 20 atomes de carbone.

5. Procédé selon la revendication 4, caractérisé en ce que ledit ou lesdits monomères éthyléniquement insaturés sont choisis dans le groupe constitué du méthacrylate de méthyle, de l'acrylate d'éthyle, de l'acrylate de butyle, de l'acide méthacrylique, de l'acide acrylique et des mélanges de ceux-ci.

6. Procédé selon la revendication 3, caractérisé en ce que ledit ou lesdits tensioactifs sont choisis dans le groupe constitué des tensioactifs anioniques, non ioniques, cationiques, amphotères et copolymérisables.

7. Procédé selon la revendication 6, caractérisé en ce que ledit ou lesdits tensioactifs comprennent un ou plusieurs tensioactifs anioniques présents en une quantité d'environ 0,5 à environ 3,0 % en poids de la quantité de monomères totaux ajoutée.

8. Procédé selon la revendication 7, caractérisé en ce que ledit tensioactif anionique est choisi dans le groupe constitué des sels hydrosolubles des benzène-sulfonates d'alkyle ayant entre 8 et 22 atomes de carbone dans le groupe alkyle, des éthersulfates d'alkyle ayant entre 8 et 22 atomes de carbone dans le groupe alkyle, et des sels de métal alcalin, d'ammonium et d'alcanolammonium ou des produits organiques de réaction sulfurique ayant dans leur structure moléculaire un groupe alkyle ou alcaryle contenant de 8 à 22 atomes de carbone et un groupe ester d'acide sulfonique ou sulfurique, et les mélanges de ceux-ci.

9. Procédé selon la revendication 8, caractérisé en ce que ledit tensioactif anionique est choisi dans le groupe constitué des sulfates d'alkyle et des benzène-sulfonates d'alkyle linéaires de sodium et de potassium, dans lesquels le groupe alkyle contient entre environ 9 et environ 15 atomes de carbone, et les mélanges de ceux-ci.

10. Procédé selon la revendication 9, caractérisé en ce que ledit tensioactif anionique est le laurylsulfate de sodium.

11. Procédé selon la revendication 3, caractérisé en ce que ledit initiateur de polymérisation comprend un initiateur hydrosoluble ou soluble dans une substance organique qui est introduit en une quantité allant d'environ 0,1 à 3 % en poids dudit ou desdits monomères éthyléniquement insaturés.

12. Procédé selon la revendication 11, caractérisé en ce que ledit initiateur de polymérisation est soluble dans ledit ou lesdits monomères éthyléniquement insaturés et est choisi dans le groupe constitué des initiateurs azo, peroxydes, peresters et d'oxydoréduction.

13. Procédé selon la revendication 12, caractérisé en ce que ledit initiateur de polymérisation est choisi dans le groupe constitué du 2,2'-azobisisobutyronitrile, du 2,2'-azobis-(2-méthylpropanenitrile), du 2,2'-azobis-(2,4-diméthylpentanenitrile), du 2,2'-azobis-(2-méthylbutanenitrile), du 1,1'-azobis-(cyclohexanecarbonitrile), du 2,2'-azobis-(2,4-diméthylvaléronitrile), du 2,2'-azobis-(2,4-diméthyl-4-méthoxyvaléronitrile) et du chlorhydrate de 2,2'-azobis-(2-amidinopropane).

14. Procédé selon la revendication 12, caractérisé en ce que ledit initiateur de polymérisation est introduit à partir du même récipient que ledit ou lesdits monomères éthyléniquement insaturés.

15. Procédé selon la revendication 11, caractérisé en ce que ledit initiateur de polymérisation est hydrosoluble et est ajouté audit réacteur de sorte que le réacteur maintienne la même ionicité tout au long de la réaction de polymérisation.

16. Procédé selon la revendication 15, caractérisé en ce que ledit initiateur de polymérisation comprend un persulfate.

17. Procédé selon la revendication 3, caractérisé en ce qu'il comprent l'étape supplémentaire d'addition d'entre 0,5 et 10 % en poids, desdits monomères ajoutés, de l'un quelconque des matériaux suivants à ladite dispersion : plastifiants, agents antimousse, pigments, colorants, teintures, agents antibactériens, parfums, produits pharmaceutiques, enzymes, agents biologiquement actifs, produits chimiques agricoles, agents actifs aux ultraviolets, stabilisateurs, modificateurs de la rhéologie, agents de réticulation et mélanges de ceux-ci.

18. Procédé selon la revendication 3, caractérisé en ce que ladite réaction a lieu à une température allant d'environ 40 °C à environ 80 °C.

19. Dispersion aqueuse contenant entre environ 15 et environ 50 % en poids de produits solides, susceptible d'être obtenu par un procédé tel que défini à l'une quelconque des revendications 1 à 19.

20. Dispersion aqueuse selon la revendication 19, ayant une taille moyenne des particules entre environ 1 et environ 60 nm, de préférence entre 5 et 40 nm.

21. Dispersion aqueuse selon la revendication 19 ou 20, comprenant en outre entre environ 0,5 et environ 10 % en poids, desdits monomères ajoutés, de l'un quelconque des matériaux suivants : plastifiants, agents antimousse, pigments, colorants, teintures, agents antibactériens, parfums, produits pharmaceutiques, enzymes, agents biologiquement actifs, produits chimiques agricoles, agents actifs aux ultraviolets, stabilisateurs, modificateurs de la rhéologie, agents de réticulation et mélanges de ceux-ci.

22. Utilisation de la dispersion aqueuse selon la revendication 19 ou 20 en tant que produit de préservation du bois, revêtement polymère ou métallique, adhésif, produit chimique d'imperméabilisation à l'eau, apprêt textile, produit chimique agricole, produit pharmaceutique, produit chimique pour champs de pétrole, encre, produit chimique de papeterie, modificateur de la rhéologie, produit cosmétique, produit de soins personnel, agent de diffusion de la lumière ultraviolette, écran solaire, dans une application biomédicale ou une application d'immuno-essais.
